(19) Europäisches Patentamt
European Patent Office
Office européen des brevets

(11) EP 4 335 948 A1

(12) EUROPEAN PATENT APPLICATION

(43) Date of publication:
13.03.2024 Bulletin 2024/11

(51) International Patent Classification (IPC):
C25D 1/04 (2006.01)   H01M 4/00 (2006.01)

(21) Application number: 22214379.4

(22) Date of filing: 16.12.2022

(52) Cooperative Patent Classification (CPC):
C25D 1/04; C25D 3/38; H01M 4/00

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 09.09.2022 PCT/EP2022/075105

(71) Applicant: Circuit Foil Luxembourg
9559 Wiltz (LU)

(72) Inventors:
• MOON, Honggi
  L-9559 Wiltz (LU)
• SANGBEOM, Kim
  L-9559 Wiltz (LU)
• SEUNGHWAN, Kim
  L-9559 Wiltz (LU)

(74) Representative: Office Freylinger
P.O. Box 48
8001 Strassen (LU)

(54) **ELECTROLYTIC COPPER FOIL AND SECONDARY BATTERY COMPRISING THE SAME**

(57) The present invention relates to an electrolytic copper foil having an excellent elongation by adjusting an average cross-sectional grain size on at least one surface area of the electrolytic copper foil, with respect to a cross-section perpendicular to a longitudinal direction, and a ratio of the grain size, and to an electrode for a secondary battery and a secondary battery including the electrolytic copper foil.

FIG. 1

**Description**

TECHNICAL FIELD

The present invention relates to an electrolytic copper foil having an excellent elongation by controlling an average cross-sectional grain size of first grains distributed in at least one surface area, and a ratio thereof, and to an electrode for a secondary battery and a secondary battery including the electrolytic copper foil.

BACKGROUND ART

In general, an electrolytic copper foil is widely used as a basic material of a printed circuit board (PCB) used in the electric/electronic industry. In addition, by improving the physical properties of the electrolytic copper foil, it is widely used as an anode current collector of a secondary battery. Accordingly, the demand for such an electrolytic copper foil is rapidly increasing mainly in small products such as slim notebook computers, personal digital assistants (PDA), e-books, MP3 players, next-generation mobile phones, and ultra-thin flat panel displays.

Such an electrolytic copper foil is prepared in a manner in which an aqueous solution of sulfuric acid-copper sulfate is used as an electrolyte, an electrodeposited copper is precipitated on a drum surface by applying a direct current between an anode (e.g., a positive electrode) and a rotating cathode drum (e.g., a negative electrode) immersed in the electrolyte, and the precipitated copper electrodeposits is stripped from the drum surface of the rotating cathode and continuously wound.

Meanwhile, in order to use the electrolytic copper foil as a current collector of a printed circuit board or a secondary battery, it should have various physical properties such as predetermined tensile strength and elongation. In particular, when such an electrolytic copper foil is used as a current collector of a lithium secondary battery, it should have excellent physical properties such that the performance of the secondary battery may be maintained even if severe conditions are repeatedly formed inside the secondary battery according to charging and discharging of the secondary battery. However, it is difficult to satisfy the desired physical properties of the copper foil only by the above-described foil preparing process. In addition, in order to improve the physical properties of the electrolytic copper foil, it is necessary to perform a separate surface treatment, resulting in complexity of the process and an increase in manufacturing costs.

DESCRIPTION OF THE INVENTION

TECHNICAL OBJECTIVES

Aspects of embodiments of the present invention are directed to an electrolytic copper foil having improved elongation characteristics for each portion by controlling an average cross-sectional grain size of first grains distributed in a surface area on at least one side and a ratio thereof.

Aspects of embodiments of the present invention are further directed to an electrode for a secondary battery including the electrolytic copper foil, and to a secondary battery including the electrode.

Other objectives and advantages of the present invention may be more clearly explained by the following detailed description and claims.

TECHNICAL SOLUTION

In order to achieve the above technical objectives, the present invention provides an electrolytic copper foil having an electrolyte surface and a drum surface, the electrolytic copper foil comprising: at least one surface area adjacent to the electrolyte surface or the drum surface and comprising first grains ($G_1$); a center area adjacent to the surface area and comprising second grains ($G_2$) having an average cross-sectional grain size larger than an average cross-sectional grain size of the first grains; and wherein the average cross-sectional grain size of the first grains ($G_1$) satisfies the following Equation 1:

$$[\text{Equation 1}]$$

$$G_1 < G_T \times 0.5,$$

in the above equation,

$G_1$ is the average cross-sectional grain size of the first grains, and

$G_T$ is an average cross-sectional grain size of an entire area of the electrolytic copper foil comprising the surface area and the center area.

In an embodiment, the surface area may be in a range from 1 to 10 % of a total thickness of the electrolytic copper foil from at least one surface of the electrolytic copper foil.

In an embodiment, the surface area may be an area corresponding to a depth up to 2 $\mu$m in a thickness direction of the electrolytic copper foil from the electrolyte surface or the drum surface of the electrolytic copper foil.

In an embodiment, a thickness of the electrolytic copper foil may be in a range from 3 to 20 $\mu$m.

In an embodiment, the average cross-sectional grain size of the first grains ($G_1$) may be 50 % or less of an average cross-sectional grain size of the second grains ($G_2$).

In an embodiment, the average cross-sectional grain size of the first grains ($G_1$) is in a range from 0.5 to 2 $\mu$m, the average cross-sectional grain size of the second grains ($G_2$) is in a range from 3 to 9 $\mu$m, and the average cross-sectional grain size of the entire area($G_T$) is in a range from 1.8 to 6.5 $\mu$m

In an embodiment, a maximum cross-sectional width of the first grains ($G_1$) may be 70 % or less of a maximum cross-sectional width of the second grains ($G_2$).

In an embodiment, the maximum cross-sectional width of the first grains ($G_1$) may be in a range from 1 to 5$\mu$m, and the maximum cross-sectional width of the second grains ($G_2$) may be in a range from 3 to 13 $\mu$m.

In an embodiment, an area ratio of the surface area and the center area may be in a range from 5 : 95 to 30 : 70.

In an embodiment, the surface area may include an electrolyte surface (M surface), a drum surface (S surface), or both surfaces.

In an embodiment, the electrolytic copper foil may have a tensile strength of 30 kgf/mm$^2$ or more; and an elongation of 3.5 % or more.

In an embodiment, a roughness (Rz) of each of opposite surfaces of the electrolytic copper foil may be in a range from 0.5 to 5.0 $\mu$m, and a difference in surface roughness between one surface and the other opposite surface may be 2.0 $\mu$m or less.

In an embodiment, the electrolytic copper foil may further include an anti-corrosion layer formed on a surface of the electrolytic copper foil, wherein the anti-corrosion layer may include at least one of chromium (Cr), molybdenum (Mo), nickel (Ni), a silane compound, and a nitrogen compound.

In an embodiment, the electrolytic copper foil may be formed through electrodepositing a plating layer by applying a current between an electrode plate and a rotating drum spaced apart from each other in an electrolyte, and a current density applied during electrodepositing of the plating layer in the surface area may be different from a current density applied during electrodepositing of the plating layer in the center area.

In an embodiment, the electrolytic copper foil may be applied as a current collector for a lithium secondary battery.

In addition, the present invention provides an electrode for a secondary battery including the electrolytic copper foil and a secondary battery including the electrode.

EFFECTS OF THE INVENTION

Aspects of one or more embodiments of the present invention may provide an electrolytic copper foil that has an excellent elongation by controlling an average cross-sectional grain size for each predetermined portion of the electrolytic copper foil and a ratio thereof to a predetermined range.

Accordingly, when such an electrolytic copper foil according to the present invention is used as a current collector for a battery, quality reliability may be continuously maintained during a preparing process and during use of the secondary battery, and excellent overall performance of the battery may be exhibited since cracking and tearing of the electrolytic copper foil during charging and discharging of the battery may be prevented.

Effects of the present invention are not limited by the contents exemplified above, and more various effects are included in the present specification.

BRIEF DESCRIPTION OF THE DRAWINGS

FIG. 1 is a cross-sectional view illustrating a structure of an electrolytic copper foil according to an embodiment of the present invention.

FIG. 2 is a cross-sectional view illustrating a structure of an electrolytic copper foil according to another embodiment of the present invention.

FIG. 3 is an EBSD image illustrating an electrolytic copper foil prepared in Example 1.

FIG. 4 illustrates surface EBSD images illustrating the electrolytic copper foil prepared in Example 1, illustrating (a) a drum surface (S surface) and (b) an electrolyte surface (M surface).

FIG. 5 is an EBSD image illustrating an electrolytic copper foil prepared in Comparative Example 1.

FIG. 6 is a schematic view illustrating an electrolytic copper foil manufacturing facility according to an embodiment of the present invention.

## DETAILED DESCRIPTION OF THE INVENTION

Hereinafter, the present invention will be described in detail.

All terms (including technical and scientific terms) used in this specification may be used in the meaning commonly understood by those of ordinary skill in the art to which the present invention pertains, unless otherwise defined. In addition, terms defined in a commonly used dictionary are not to be interpreted ideally or excessively, unless clearly defined in particular.

In addition, throughout this specification, when a part "includes" or "comprises" a certain element, it is to be understood as an open-ended term that includes the possibility of further including other elements rather than except other elements, unless otherwise stated. In addition, throughout the specification, "on" or "above" means not only when it is located on or beneath a target part, but also includes the case where there is another part therebetween, and does not mean that it is located upwardly with respect to the direction of gravity. In the present specification, terms such as "first" and "second" do not indicate any order or importance but are used to distinguish components from each other.

As used herein, "preferred" and "preferably" refer to embodiments of the present invention that may provide certain advantages under certain circumstances. However, other embodiments may also be preferred, under the same or other circumstances. Additionally, the recitation of one or more preferred embodiments does not imply that other embodiments are not useful, nor is it intended to exclude other embodiments from the scope of the invention.

<Electrolytic copper foil>

An example of the present invention is a battery electrode foil applicable to a current collector of a secondary battery, specifically, an electrolytic copper foil.

Such an electrolytic copper foil is differentiated from a conventional electrolytic copper foil having substantially the same average cross-sectional grain size across an entire area of the electrolytic copper foil in that average cross-sectional grain sizes of respective areas of the electrolytic copper foil are different from each other.

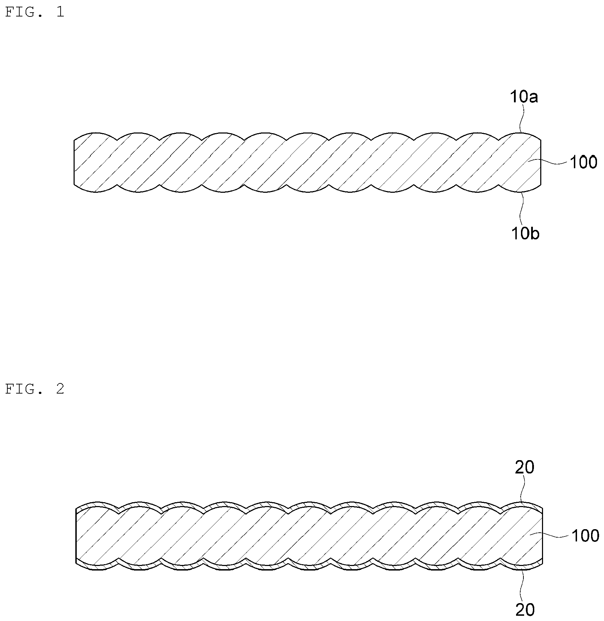

Hereinafter, configuration of the electrolytic copper foil according to the present invention will be described with reference to FIG. 1. FIG. 1 is a cross-sectional view illustrating a structure of an electrolytic copper foil according to the present invention.

Referring to FIG. 1, an electrolytic copper foil 100 includes a copper layer having one surface (10a, drum surface, S surface) and another surface (10b, electrolyte surface, M surface), where the copper layer includes a plurality of grains including, with respect to a cross-section perpendicular to a longitudinal direction of the electrolytic copper foil 100, first grains ($G_1$) included in a surface area on at least one side (e.g., at least one surface area); second grains ($G_2$) included in a center area other than the surface area and having an average grain size larger than an average grain size of the first grains ($G_1$); and overall average cross-sectional grains ($G_T$) of the electrolytic copper foil, and an average cross-sectional grain size of the first grains ($G_1$) satisfies Equation 1 below:

$$[\text{Equation 1}]$$

$$G_1 < G_T \times 0.5,$$

in the above Equation,

$G_1$ is an average cross-sectional grain size of the first grains, and

$G_T$ is an average cross-sectional grain size of an entire area of the electrolytic copper foil.

As used herein, respective average cross-sectional grain sizes of grains distributed in the surface area, the center area and the entire area are measured, with respect to a cross-section perpendicular to a longitudinal direction of the electrolytic copper foil 100, according to an electron backscatter diffraction (EBSD) method.

The electron backscatter diffraction (EBSD) method used in calculating of the average cross-sectional grain size is a technique of analyzing an orientation of a material in a manner where a sample is mounted on a scanning electron microscope (SEM) and an electron (backscattered electrons) reflected when accelerated electrons are injected into the sample is detected. The information obtained from the analysis of grains according to EBSD includes information up to a depth of several 10 nm at which an electron beam penetrates the sample. Such EBSD may be analyzed based on the results of orientation and diffraction patterns of the materials analyzed using a pattern quality map (PQ map) and an inverse pole figure map (IPF map). In such a case, the PQ Map expresses a difference in a signal intensity of electric charges (e.g., electrons, backscattered electrons) reflected from the sample as a difference in contrast (e.g., light and dark), and is generally expressed darkly at grain boundaries because the signal is weak. In addition, the IPF Map expresses a difference in a crystal direction (orientation) of the sample in color. The term "twin" means a plane that is 60° misorientated with respect to a crystal plane of the sample.

In general, an electrolytic copper foil includes a plurality of irregularly crystallized grains, and the plurality of grains are present randomly without exhibiting special dependence according to a portion of the electrolytic copper foil. For example, when a plurality of grains present across an entire area of the electrolytic copper foil have a small average cross-sectional grain size, it exhibits high tensile strength characteristics (e.g., strength), while having a low elongation, and thus it is difficult to be applied to batteries such as round or can-type batteries which require excellent elongation. In addition, when a plurality of grains present across the entire area of the electrolytic copper foil have a large average cross-sectional grain size, it exhibits low tensile strength characteristics (e.g., strength), while having a high elongation, and thus it is difficult to be applied to batteries such as pouches which require high strength characteristics.

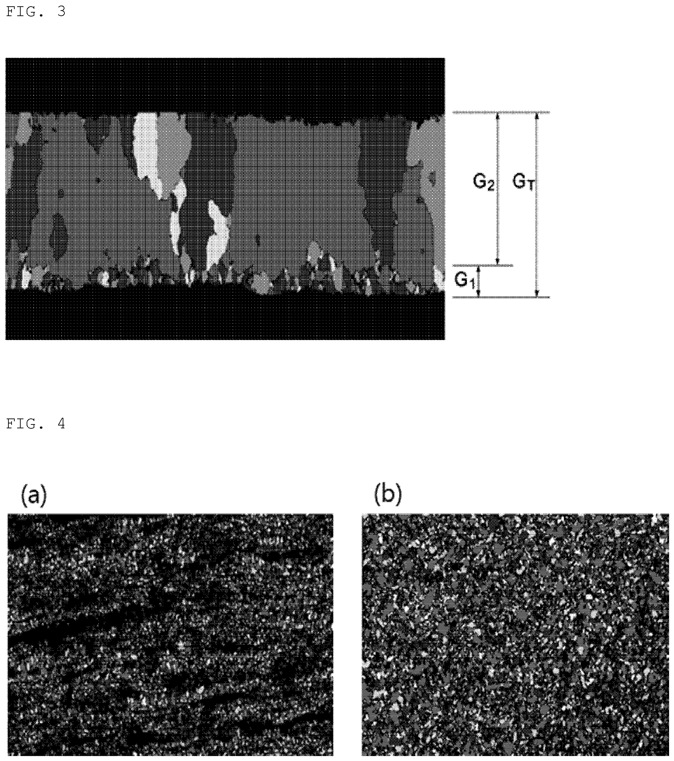

On the other hand, in the electrolytic copper foil 100 of the present invention, the average cross-sectional grain size of grains present in the at least one surface area of the electrolytic copper foil, the center area of the electrolytic copper foil other than the surface area, and the entire area of the electrolytic copper foil are respectively adjusted to a predetermined range. More specifically, the average grain size of the first grains ($G_1$) present in the surface area adjacent to at least one surface of the electrolytic copper foil 100 is adjusted to be small, for example, less than approximately 50 % of the overall average cross-sectional grain size ($G_T$) of the electrolytic copper foil (see FIG. 3). When the average cross-sectional grain size of the first grains $G_1$ present on the surface of the electrolytic copper foil 100 is small as described above, a surface roughness increases and a contact area with active materials increases when applied to a battery, such that a sheet resistance and adhesion may be improved. Since a surface tensile strength (e.g., strength) of the electrolytic copper foil itself increases, it is hard and not easily torn, such that when applied to a battery, a high tensile strength may be maintained and physical stability may be exhibited.

In addition, when the average grain size of the second grains ($G_2$) present in the center area of the electrolytic copper foil, for example, a center portion of the electrolytic copper foil except the surface area, is large, it may have a high elongation, thereby preventing cracking and tearing phenomenon of the electrolytic copper foil during processing of the electrolytic copper foil and/or during charging and discharging. That is, in the electrolytic copper foil 100 according to the present invention, the surface area on at least one surface may exhibit a high strength, and the center area except the surface area may exhibit a high elongation.

The above-mentioned average cross-sectional grain size parameter for each predetermined portion of the electrolytic copper foil 100 is a unique physical property of the electrolytic copper foil 100 according to the present invention, and thus it may correspond to a novel technical characteristic that is distinguished from conventional electrolytic copper foils. This average cross-sectional grain size is based on a measurement of a cross-section of the electrolytic copper foil along a thickness direction of the electrolytic copper foil by EBSD. In addition, it is also within the scope of the present invention to measure the grain size using a conventional method for measuring grain size known in the art, for example, measurement using a scanning electron microscope (SEM) through micro-etching to see the cross-sectional grain of the electrolytic copper foil. In such a case, a numerical value may partly vary depending on the applied average grain size measurement method and the measurement conditions.

As a specific example, the average cross-sectional grain size of the first grains $G_1$ included in the surface area of the electrolytic copper foil 100 may be 10 % or more and less than 50 %, and more specifically, in a range from 15 to 40 %, of the overall average cross-sectional grain size ($G_T$) across the entire area of the electrolytic copper foil. In the case of the electrolytic copper foil of the present invention that satisfies the above-mentioned average grain size value for each area of the electrolytic copper foil, it exhibits a synergistic effect in terms of tensile strength and elongation, such that quality reliability may be continuously maintained when applied to batteries.

Specifically, the average cross-sectional grain size of the first grains $G_1$ may be in a range from 0.5 to 2.0 $\mu$m, and the average cross-sectional grain size GT of the entire area may be in a range from 1.8 to 6.5 $\mu$m. More specifically, it is preferable that the average cross-sectional grain size of the first grains $G_1$ is in a range from 0.7 to 2.0 $\mu$m, and the average cross-sectional grain size GT of the entire area is in a range from 2.0 to 6.0 $\mu$m.

In another example, the average cross-sectional grain size of the first grains $G_1$ may be 50 % or less, and specifically in a range from 10 to 40 %, of the average cross-sectional grain size of the second grains $G_2$. Specifically, the average cross-sectional grain size of the first grains $G_1$ is in a range from 0.5 to 2.0 $\mu$m, and more specifically, in a range from 0.7 to 2.0 $\mu$m. In addition, the average cross-sectional grain size of the second grains $G_2$ may be in a range from 3.0 to 9.0 $\mu$m, and more specifically, in a range from 3.0 to 8.5 $\mu$m.

In another example, with respect to the cross-section perpendicular to the longitudinal direction of the electrolytic copper foil, a maximum cross-sectional width of the first grains $G_1$ may be 70 % or less, specifically in a range from 10 to 60 %, of a maximum cross-sectional width of the second grains $G_2$. Specifically, the maximum cross-sectional width of the first grains $G_1$ may be in a range from 1 to 2 $\mu$m, and the maximum cross-sectional width of the second grains $G_2$ may be in a range from 3 to 15 $\mu$m.

In another example, an area ratio between the surface area in which the first grains $G_1$ are distributed and the center area in which the second grains $G_2$ are distributed is in a range from 5 : 95 to 30 : 70 % with respect to 100 % of the total area of the electrolytic copper foil, and specifically, the area ratio between the surface area and the center area is preferably in a range from 5 : 95 to 20 : 80 %.

In the present specification, the surface area may mean a range from 1 to 10 % of a total thickness of electrolytic copper foil from at least one surface of the electrolytic copper foil. More specifically, the thickness of the electrolytic copper foil 100 may be in a range from 3 to 20 $\mu$m, and in such a case, the surface area may be an area corresponding to a depth up to 2 $\mu$m in a thickness direction of the electrolytic copper foil from the electrolyte surface or the drum surface of the electrolytic copper foil 100.

As described above, in the case of the electrolytic copper foil of the present invention having such a predetermined average cross-sectional grain size parameter and a predetermined corresponding numerical value for each predetermined area, it may have both excellent elongation and high tensile strength for each portion of the electrolytic copper foil, and may also have excellent flexibility, thereby capable of suppressing occurrence of cracks due to repeated bending fatigue and exhibiting excellent quality reliability.

As a specific example, the electrolytic copper foil 100 may have a tensile strength of 30 kgf/mm$^2$ or more; and an elongation of 3.5 % or more. Specifically, it is preferable to simultaneously exhibit a tensile strength in a range from 32 to 65 kgf/mm$^2$ and an elongation in a range from 5 to 20 %. In such a case, the elongation may be lowered as the thickness of the copper foil becomes thinner, with respect to a thickness in a range from 4 to 18 $\mu$m.

The electrolytic copper foil 100 according to the present invention may be an electrolytic copper foil prepared through a foil forming process by an electroplating method in which, for example, one surface of the electrolytic copper foil 100 has a shiny surface (e.g., an "S surface," a drum surface, etc.) 10a which has a relatively low roughness and thus has a high gloss, and another surface of the copper foil has a matte surface (e.g., an "M surface", an electrolyte surface, etc.) 10b which has a relatively high roughness due to so-called mountain structures and thus has a low gloss.

In such a case, a bonding force with an active material and a yield of the battery may greatly vary depending on a surface state of the electrolytic copper foil 100 which is used as the current collector. For example, when surface non-uniformity due to the surface roughness of the copper foil is too high, there is a problem in that a discharge-capacity retention rate of the secondary battery is lowered, and on the other hand, when the surface of the copper foil is too uniform, it may be difficult to secure the binding force between the current collector and the active material, and thus the active material may be desorbed from the current collector during operation of the secondary battery, thereby causing problems such as an internal short circuit. In addition, according to a state of the copper foil, a difference in a coating amount of the active material between the opposite surfaces may be caused. The non-uniform coating amount between the opposite surfaces may cause a problem that a capacity of the electrode may decrease and/or unstable behavior of the electrode may occur due to a difference in deformation between the opposite surfaces of the current collector. Accordingly, in an embodiment of the present invention, by adjusting the surface roughness of the opposite surfaces of the electrolytic copper foil 100 to a predetermined range, it is possible to secure required physical properties of the electrolytic copper foil 100 as a current collector, that is, an excellent bonding strength with the active materials and a high discharge capacity retention rate.

In an example, the electrolytic copper foil 100 includes a drum surface (e.g., one surface, 10a) and an electrolyte surface (e.g., another surface, 10b), and a surface roughness of the opposite surfaces 10a and 10b may be approximately in a range from 0.5 to 5.0 $\mu$m, in terms of Rz (ten-point average roughness), and specifically in a range from 1.0 to 4.0 $\mu$m. More specifically, the surface roughness of the drum surface (e.g., S surface, 10a) of the copper foil may be in a range from 1.0 to 2.5 $\mu$m, and the surface roughness of the electrolyte surface (e.g., M surface 10b) may be in a range from 1.0 to 2.5 $\mu$m.

In another example, a difference in surface roughness between the drum surface 10a and the electrolyte surface 10b of the electrolytic copper foil 100 may be 1.0 $\mu$m or less, and specifically, 0.5 $\mu$m or less.

In addition, a thickness of the electrolytic copper foil 100 may have a typical thickness range known in the art, for example, in a range from 3 $\mu$m to 20 $\mu$m. Specifically, it may be in a range from 10 to 20 $\mu$m (STD copper foil), or in a range from 4 to 18 $\mu$m (BF copper foil), but the present invention is not particularly limited thereto. When the thickness of the electrolytic copper foil 100 is too thin to be less than about 3 $\mu$m, it is difficult to handle the copper foil in a process of manufacturing the battery, lowering the workability, and on the other hand, when the thickness of the electrolytic copper foil 100 exceeds about 20 $\mu$m, it is difficult to manufacture a high-capacity battery because volume and weight may increase due to a thickness of a current collector when the electrolytic copper foil 100 is used as a current collector.

The electrolytic copper foil 100 according to the present invention is not particularly limited in terms of, for example, components, composition, and/or structure constituting the electrolytic copper foil, as long as it satisfies the average cross-sectional grain size parameter and related characteristics for each predetermined area of the electrolytic copper foil.

The electrolytic copper foil 100 may include or be formed of conventional copper or a copper alloy known in the art, and a metal component included in the alloy is not particularly limited, and a conventional metal known in the art may be used. For example, the copper foil may be a standard battery foil (STD) or a copper foil for electric vehicle batteries (BF), but the present invention is not particularly limited thereto. The electrolytic copper foil 100 may be in the shape of a foil, specifically, may be a flat copper foil.

In an example, the electrolytic copper foil 100 is preferably an electrolytic copper foil formed through electroplating in which a current is applied between an electrode plate and a rotating drum which are spaced apart from each other in an electrolyte. The electrolyte may have a composition including 50 to 150 g/l of copper ions, 50 to 150 g/l of sulfuric acids, 1 to 100 ppm of halogens, 0.003 to 3.0 ppm of brighteners, 0.003 to 15.0 ppm of low molecular weight gelatins, 0.003 to 15.0 ppm of HEC, and 0.001 to 0.1 ppm of levelers, but the present invention is not particularly limited thereto, and may have a common composition known in the art.

In addition, unless otherwise specified, the above-described physical properties may be based on a thickness in a range from 3 to 20 $\mu$m of the copper foil. However, embodiments of the present invention are not limited to the above-described thickness range, and may be appropriately adjusted within a typical thickness range known in the art.

In an embodiment, referring to FIG. 2, the electrolytic copper foil 100 according to an embodiment of the present invention may include an anti-corrosion layer 20 formed on the surfaces 10a and 10b thereof.

The anti-corrosion layer 20 is selectively formed on the surfaces 10a and 10b of the electrolytic copper foil 100 to prevent corrosion (e.g., rust). The anti-corrosion layer 20 may include conventional inorganic corrosion-resistant (e.g., rust-preventive) materials, organic corrosion-resistant materials, or mixtures thereof known in the art, for example, at least one or more of chromium (Cr), molybdenum (Mo), nickel (Ni), a silane compound, and a nitrogen compound.

In such a case, the nitrogen compound may include at least one or more of common triazole compounds and amine compounds known in the art. The applicable triazole compound may be selected from, for example, benzotriazole, tolyltriazole, carboxybenzotriazole, chlorobenzotriazole, ethylbenzotriazole and naphthotriazole. In addition, available amine compounds may be selected from, for example, amide, acrylamide, acetamide, auramine, dodecyltrimethyl ammonium bromide (DTAB) and diethylenetriamine (DETA).

The anti-corrosion layer 20 may serve to impart not only the anti-corrosion properties to the electrolytic copper foil 100 described above, but also heat-resistance properties and/or properties to increase a bonding strength with active materials.

The electrolytic copper foil 100 according to the present invention may be manufactured through a conventional electrolytic foil-forming apparatus.

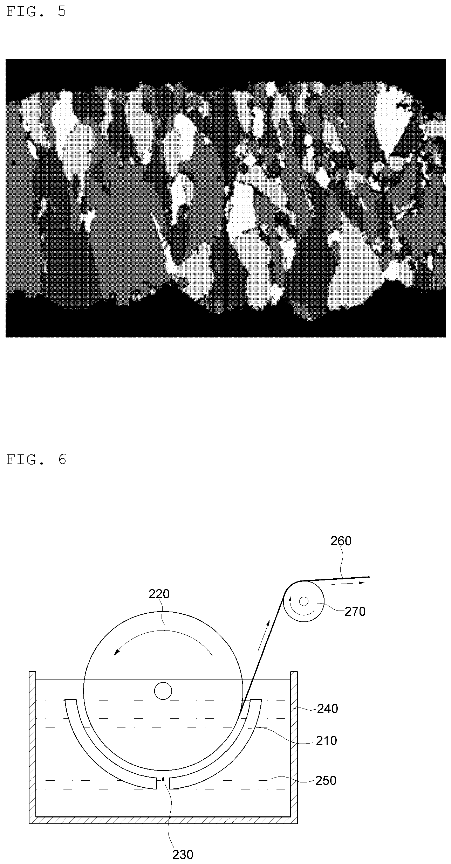

As an example, referring to FIG. 6, a drum 220, which serves as a cathode, and an anode 210 are installed in an electrolytic cell 240 to which an electrolyte 250 is continuously supplied, and a predetermined current is applied in a state that the drum 220 and the anode 210 are spaced apart from each other so that the electrolyte may be interposed therebetween. In such a case, as the drum 220 rotates, an electrolytic copper foil 260 is electro-deposited on a surface of the drum 220, and then electro-deposited electrolytic copper foil 260 is wound through a guide roll 270.

In particular, in the present invention, in order to manufacture an electrolytic copper foil having different average cross-sectional grain sizes for each predetermined area through a single electroplating process, it is characterized in that process conditions for electrodepositing a plating layer, such as a copper layer, are controlled differently in the surface area adjacent to at least one surface of the electrolytic copper foil and in the center area except the surface area. Specifically, a current density applied to electrodeposit the plating layer in the surface area and a current density applied to electrodeposit the plating layer in the center area are controlled differently.

First, the semi-cylindrical anode 210 and the rotating cathode drum 220 are disposed in the electrolytic cell 240 while maintaining a certain distance therebetween.

The anode 210 is not particularly limited, and for example, a lead alloy or titanium coated with iridium oxide may be used. In addition, the cathode 220 may be used by plating chromium on stainless steel. However, the present invention is not limited thereto.

Next, the electrolyte is continuously supplied between the anode 210 and the rotating cathode drum 220 in the electrolytic cell 240. Then, when a direct current is applied between the anode 210 and the cathode 220, copper ions in the electrolyte are reduced to a metal of a predetermined thickness and precipitated in the cathode 220 to form a copper layer.

In general, when the current density conditions are controlled during electroplating, the grain size or crystal structure of the plating layer to be electrodeposited may be controlled. For example, when the applied current density increases, the grains become smaller, such that the tensile strength of the electrolytic copper foil increases and the elongation decreases, and on the other hand, when the applied current density decreases, the grains become larger, such that the tensile strength of the electrolytic copper foil decreases and the elongation increases.

In the electrodepositing of the plating layer of the electrolytic copper foil 100 according to the present invention, the electroplating conditions for each step are not particularly limited, and may be appropriately adjusted within a range known in the art. For example, in the electrodepositing of the plating layer in the surface area and the center area of the electrolytic copper foil, the applied current densities are different from each other, and may each be in a range from 20 to 100 A/dm$^2$, and specifically in a range from 40 to 80 A/dm$^2$. More specifically, the current density applied during electrodepositing of the plating layer in the surface area may be in a range from 20 to 50 A/dm$^2$, and the current density applied during electrodepositing of the plating layer in the center area may be in a range from 50 to 100 A/dm$^2$.

In the present invention, except for the current density conditions described above, the electrolytic copper foil may be manufactured using a conventional electrolytic plating method known in the art and its conditions without limitation.

In such a case, a conventional electroplating electrolyte component known in the art may be used as the electrolyte without particular limitation, and may include, for example, copper sulfate, sulfuric acid and a trace amount of chlorine as main components and may include at least one conventional plating additive.

As the additive, additives commonly used in the electroplating field may be used without limitation, and examples thereof may include an accelerator, a brightener, a smoothing agent, a suppressor (e.g., inhibitor), or a mixture thereof.

The accelerator/brightener is added to give gloss to a plating surface and to obtain a fine plating layer, and may include, for example, organic substances including disulfide bond (-S-S-) and a mercapto group (-SH) or a sulfonate-based additive including sulfide. Specific examples thereof may include at least one of 3-mercaptopropyl sulfonate (MPS), bis-(3-sulfopropyl)-disulfide (SPS), 3-N,N-dimethlyamonodithiocarbamoy-1-propanesulfonic acid (DPS), and polymethyldithiocarbonic amine-sulfopropylsulfonate (PTA) .

The suppressor/carrier adsorbs on a surface to slow the electroplating by interfering with the access of copper ions, and is a component added to realize stable low roughness. For example, polymer-based organic compounds such as hydroxyethyl cellulose (HEC), polyethylene glycols (PEG), polypropylene glycols (PPG), polyvinyl alcohols, low molecular weight gelatin (molecular weight: about 1,000 to 100,000), cellulose-based additives, and collagen, or a mixture thereof may be used. In addition, an organic material including a polyether-based polymer material and a functional group including a nitrogen atom, a sulfosuccinate-based surfactant, and/or an ethandiamineoxirane-based surfactant may be used.

The leveler/flattener is a component added to obtain a flat (e.g., planar), low-roughness copper foil by removing surface steps. For example, low molecular weight nitrides (e.g., thiourea series, amides, benzimidazole series, benthiazol series, dimethyl aniline, etc.) may be used, and specifically, thiourea, JGB (Janus Green B), PEI, 3-(benzothiazolyl- 2-mercapto)-propyl-sulfonic acid may be used.

In an example, the electrolyte may include, for example, 50 to 150 g/l of copper ions, 50 to 150 g/l of sulfuric acid, and 1 to 100 ppm of halogens, such as chlorine, and further includes, for example, 0.003 to 3.0 ppm of at least one additive for increasing a grain size, and/or 0.001 to 5.0 ppm of at least one additive for inhibiting growth of grain size.

As the additive for increasing the grain size, at least one or more of conventional brighteners and accelerators known in the art may be used. In addition, as the additive for suppressing the grain size, a conventional leveler and the like known in the art may be used.

A specific composition of the additive added to the electrolyte according to the present invention may include, for example, 0.003 to 3.0 ppm of the brightener, 0.003 to 5.0 ppm of the low molecular weight gelatin, 0.003 to 10.0 ppm of HEC, and 0.001 to 0.1 ppm of the leveler.

In addition, the electroplating conditions applied at the time of electrodepositing of the electrolytic copper foil are not particularly limited, and may be appropriately adjusted within a range known in the art. For example, a temperature of the electrolyte may be in a range from 35 to 75°C, and specifically, in a range from 40 to 60°C. A flow rate of the supplied electrolyte may be, for example, in a range from 30 to 120 m$^3$/hr, and specifically in a range from 50 to 100 m$^3$/hr. However, the present invention is not specifically limited to the above-described range.

<Electrode>

Another embodiment of the present invention is an electrode for secondary batteries including the above-described electrolytic copper foil as a current collector.

In a lithium secondary battery, for example, a foil including aluminum (Al) is generally used as a cathode (e.g., positive electrode) current collector combined with a cathode active material, and a foil including copper (Cu) is generally used as an anode (e.g., negative electrode) current collector combined with an anode active material. Accordingly, in the present invention, a case in which the electrolytic copper foil 100 is applied as an anode current collector will be described.

In an example, the anode includes the above-mentioned electrolytic copper foil; and an anode active material layer disposed on the electrolytic copper foil.

The anode active material layer includes an anode active material, and may further include a conventional binder and/or a conductive material known in the art.

The anode active material is not particularly limited as long as it is a compound capable of intercalation and deintercalation of ions. Non-limiting examples of applicable anode active materials may include, but may not be limited to, carbon-based and silicon-based anode active materials, and in addition, lithium metal or alloys thereof, and other metal oxides such as $TiO_2$, $SnO_2$ and $Li_4Ti_5O_{12}$ capable of occluding and releasing lithium and having an electric potential of less than 2 V with respect to lithium may be used.

Since a method of manufacturing an electrode for secondary batteries using the above-described electrolytic copper foil is known to those skilled in the art to which the present invention pertains, a detailed description thereof will be omitted.

<Secondary battery>

A secondary battery according to another embodiment of the present invention includes an anode (e.g., negative electrode) including the above-described electrolytic copper foil.

The secondary battery may be a lithium secondary battery, and specifically, may include a lithium metal secondary battery, a lithium ion secondary battery, a lithium polymer secondary battery, a lithium ion polymer secondary battery, or the like.

In an example, the lithium secondary battery may include a cathode (e.g., positive electrode) including a cathode active material; an anode (e.g., negative electrode) including an anode active material; and an electrolyte interposed between the cathode and the anode. In addition, a separator may further be included.

The lithium secondary battery according to an embodiment of the present invention may be manufactured according to conventional methods known in the art, for example, by interposing a separator between the cathode and the anode and then introducing the electrolyte to which the electrolyte additive is added.

The electrolyte may include conventional lithium salts known in the art; and an electrolyte solvent.

As the separator, a porous separator, for example, a polypropylene-based, polyethylene-based, or polyolefin-based porous separator may be used, or an organic/inorganic composite separator including an inorganic material may be used.

Hereinafter, the present invention will be described in detail through embodiments. However, the following embodiments are only to illustrate the present invention, and the present invention is not limited by the following embodiments.

**[Example 1]**

An electrolyte was introduced into an electrolytic cell, and an anode and a rotating cathode drum were immersed in the electrolyte to be spaced apart from each other, and then a current was applied therebetween to form a copper layer.

In such a case, a distance between the electrodes (e.g., a distance between the cathode drum and the anode) at a plating start portion or a plating end portion was configured to be wider than a distance between the electrodes (e.g., a distance between the cathode drum and the anode) at another plating portion other than the above portion. The plating start portion or the plating end portion described above are a site in which a masking is installed in order to control a thickness deviation of the copper foil.

In addition, a concentration and a current density of an electrolyte additive were controlled such that the grain size was reduced during plating at the plating start portion or the plating end portion. Specifically, it was adjusted to a copper ion concentration of 70 g/l, a sulfuric acid concentration of 100 g/l, and a chloride ion concentration of 35 ppm at an electrolyte temperature of 60°C. In addition, as the additive added to the electrolyte, an additive G used low molecular weight gelatin [molecular weight (Mw) of 3,000 g/mol], an additive B used 3-mercaptopropyl sulfonate (MPS), an additive T used thiourea which is a leveler, and an additive H used hydroxyethyl cellulose (HEC). Respective contents thereof were the additive G (5 ppm), the additive B (2.0 ppm), the additive T (0 ppm), and the additive H (10 ppm). In such a case, the electrolyte composition and the current density conditions for forming the copper layer in the surface area are as shown in A of Table 1 below.

Then, a copper layer in the center area was electrodeposited by controlling the current density conditions in the electrolytic cell. In such a case, the current density conditions for forming the copper layer in the center area are as shown in B of Table 1 below. Then, a plating thickness of 10 $\mu$m was prepared by adjusting a drum speed. Thereafter, chromium (Cr) treatment was performed through immersion in a small tank to give anti-corrosion (e.g., anti-rust) ability. Specifically, in the present example, small grains were generated by the electrolyte additive composition at a low current density, and smaller grains were formed at a high current density, and then the grains in the corresponding center area grew at room temperature. That is, the copper foil according to the present invention is prepared in a manner that there is no change in the grain size at the plating start portion and/or the plating end portion (e.g., terminal), and during plating of the center area (middle portion), very small grains are formed and then grow.

The prepared electrolytic copper foil was sampled to 10 cm x 20 cm in three places (left, middle, right) with a full width (1300 mm x 500 mm), and physical properties of the copper foil were measured as in the following Experimental Example. An EBSD analysis was carried out by sampling the electrolytic copper foil at 10 cm x 20 cm in the middle.

**[Examples 2 and 3]**

Electrolytic copper foils of Examples 2 and 3 were prepared in the same manner as in Example 1, except that electrolysis conditions were changed as shown in Table 1 below. Then, physical properties measurement and analysis of the electrolytic copper foil were carried out in the same manner as in Example 1.

[Table 1]

| | | Electrolyte composition | | | | Current density (A/dm$^2$) | |
| --- | --- | --- | --- | --- | --- | --- | --- |
| | | Additive (PPM) | | | | | |
| | | B | G | H | T | A | B |
| Example | 1 | 2.0 | 5.0 | 10.0 | - | 30 | 60 |
| | 2 | 2.0 | 5.0 | 10.0 | 0.01 | 30 | 60 |
| | 3 | 0.1 | 0.1 | 0.1 | - | 30 | 60 |
| Comp. Ex. | 1 | 0.0 | 5.0 | 10.0 | - | 30 | 60 |
| | 2 | 0.0 | 20.0 | 10.0 | - | 30 | 60 |
| | 3 | 2.0 | 5.0 | 10.0 | 0.2 | 30 | 60 |

**[Comparative Examples 1 to 3]**

Electrolytic copper foils of Comparative Examples 1 to 3 were prepared in the same manner as in Example 1, except that the electrolysis conditions were changed as shown in Table 1. Then, physical properties measurement and analysis of the electrolytic copper foil were carried out in the same manner as in Example 1.

**[Experimental Example: Evaluation of Physical Properties of Electrolytic Copper Foil]**

The physical properties of the electrolytic copper foils prepared in Examples 1 to 3 and Comparative Examples 1 to 3 were evaluated in the following manner, and the results are shown in Tables 2 and 3 below.

<Method for evaluating physical properties>

(1) Measurement of Thickness

A thickness was measured by a unit basis weight method, which is a typical thickness measurement method of copper foil (IPC-TM-650 2.2.12).

(2) Measurement of Elongation

An elongation (%) was measured using UTM (Instron, model name: 5942) in accordance with IPC-TM-650 2.4.18 standard.

(3) Measurement of Tensile Strength

A tensile strength (MPa) was measured using UTM (Instron, model name: 5942) in accordance with IPC-TM-650 2.4.18 standard.

(4) Measurement of Average Grain Size

Bruker's EBSD equipment was used, and a minimum pixel size was set to 100 nm or less, and a magnification was set to 10,000 times. Analysis was conducted based on the results of orientation and diffraction patterns of materials analyzed using a pattern quality map (PQ map) and an inverse pole figure map (IPF map). In such a case, the PQ Map expresses a difference in the signal intensity of the reflected electric charges (electrons) as a difference in contrast (e.g., light and dark), and is generally expressed darkly at the grain boundary because the signal is weak. In addition, the IPF Map was measured by expressing the difference in crystal direction (orientation) with color. Herein, twin means a plane that is misorientated by 60° with respect to the crystal plane, and the average grain size was measured after removing the twins.

(5) Measurement of Maximum Grain Width

Based on the EBSD measurement result image, maximum widths from among grains in contact with the S surface and the M surface were measured, and for grains inside the cross-section, a maximum width from among grains at a center of the cross-section was measured.

[Table 2]

| | | Thickness ($\mu$m) | Average cross-sectional grain size ($\mu$m, except twins) | | | | Physical properties | |
| | | | Surface area ($G_1$) | | Center area ($G_2$) | Entire area ($G_T$) | Tensile strength (kgf/mm$^2$) | Elongation (%) |
| | | | S surface | M surface | | | | |
| Ex. | 1 | 10 | 0.82 | 3.21 | 8.22 | 5.75 | 33.2 | 15.2 |
| | 2 | 10 | 1.73 | 2.47 | 8.19 | 5.25 | 35.4 | 13.2 |
| | 3 | 10 | 0.71 | 0.82 | 3.13 | 1. 95 | 60.2 | 7.2 |
| Comp Ex. | 1 | 10 | 1.57 | 1.66 | 4.15 | 2.67 | 28.5 | 3.2 |
| | 2 | 10 | 1. 65 | 1.72 | 3.78 | 2.23 | 30.5 | 2.5 |
| | 3 | 10 | 0.93 | 1.09 | 2.65 | 1.74 | 50.3 | 3.3 |

[Table 3]

| | | Cross-sectional grain maximum width ($\mu$m, except twins) | | | Maximum grain width ratio (%) | | Grain size ratio (%) | |
| | | Surface area ($G_1$) | | Cente r area ($G_2$) | S surface | M surface | S surface | M surface |
| | | S surface | M surface | | | | | |
| Ex. | 1 | 1.25 | 12.5 | 12.5 | 10% | 100% | 14% | 56% |
| | 2 | 4.7 | 12.3 | 11.6 | 41% | 106% | 33% | 47% |
| | 3 | 1.79 | 2.25 | 3.25 | 55% | 69% | 36% | 42% |
| Comp Ex. | 1 | 4.25 | 4.85 | 5.32 | 80% | 91% | 59% | 62% |
| | 2 | 4.35 | 5.5 | 5.16 | 84% | 107% | 74% | 77% |
| | 3 | 2.85 | 3.6 | 3.52 | 81% | 102% | 53% | 63% |

[Reference numeral]

100:     Electrolytic copper foil
10a:     One surface (drum surface)
10b:     The other opposite surface (electrolyte surface)
20:      Anti-corrosion layer
210:     Anode
220:     Rotating cathode drum
230:     Electrolyte inlet
240:     Electrolytic cell
250:     Electrolyte

260:    Electrolytic copper foil
270:    Guide roll

**Claims**

1.  An electrolytic copper foil having an electrolyte surface and a drum surface, the electrolytic copper foil comprising:

    at least one surface area adjacent to the electrolyte surface or the drum surface and comprising first grains ($G_1$);
    a center area adjacent to the surface area and comprising second grains ($G_2$) having an average cross-sectional grain size larger than an average cross-sectional grain size of the first grains; and
    wherein the average cross-sectional grain size of the first grains ($G_1$) satisfies the following Equation 1:

    $$[\text{Equation 1}]$$

    $$G_1 < G_T \times 0.5,$$

    in the above equation,

    $G_1$ is the average cross-sectional grain size of the first grains, and
    $G_T$ is an average cross-sectional grain size of an entire area of the electrolytic copper foil comprising the surface area and the center area.

2.  The electrolytic copper foil of claim 1, wherein the surface area is in a range from 1 to 10 % of a total thickness of the electrolytic copper foil from at least one surface of the electrolytic copper foil.

3.  The electrolytic copper foil of claim 1 or 2, wherein the surface area is an area corresponding to a depth up to 2 $\mu$m in a thickness direction of the electrolytic copper foil from the electrolyte surface or the drum surface of the electrolytic copper foil.

4.  The electrolytic copper foil of claim 1, 2 or 3, wherein a thickness of the electrolytic copper foil is in a range from 3 to 20 $\mu$m.

5.  The electrolytic copper foil of any one of the preceding claims, wherein the average cross-sectional grain size of the first grains ($G_1$) is 50 % or less of the average cross-sectional grain size of the second grains ($G_2$).

6.  The electrolytic copper foil of any one of the preceding claims, wherein the average cross-sectional grain size of the first grains ($G_1$) is in a range from 0.5 to 2 $\mu$m,

    the average cross-sectional grain size of the second grains ($G_2$) is in a range from 3 to 9 $\mu$m, and
    the average cross-sectional grain size of the entire area(GT) is in a range from 1.8 to 6.5 $\mu$m.

7.  The electrolytic copper foil of any one of the preceding claims, wherein a maximum cross-sectional width of the first grains ($G_1$) is 70 % or less of a maximum cross-sectional width of the second grains ($G_2$).

8.  The electrolytic copper foil of claim 7, wherein the maximum cross-sectional width of the first grains ($G_1$) is in a range from 1 to 5$\mu$m, and
    the maximum cross-sectional width of the second grains ($G_2$) is in a range from 3 to 13 $\mu$m.

9.  The electrolytic copper foil of any one of the preceding claims, wherein an area ratio of the surface area and the center area is in a range from 5 : 95 to 30 : 70.

10. The electrolytic copper foil of any one of the preceding claims, wherein the surface area comprises the electrolyte surface (M surface), the drum surface (S surface), or both surfaces.

11. The electrolytic copper foil of any one of the preceding claim, having a tensile strength of 30 kgf/mm$^2$ or more; and an elongation of 3.5 % or more.

**12.** The electrolytic copper foil of any one of the preceding claims, wherein a surface roughness (Rz) of each of opposite surfaces of the electrolytic copper foil is in a range from 0.5 to 5.0 $\mu$m, and
a difference in surface roughness between one surface and the other opposite surface is 2.0 $\mu$m or less.

**13.** The electrolytic copper foil of any one of the preceding claims, further comprising an anti-corrosion layer formed on a surface of the electrolytic copper foil,
wherein the anti-corrosion layer comprises at least one of chromium (Cr), molybdenum (Mo), nickel (Ni), a silane compound, and a nitrogen compound.

**14.** The electrolytic copper foil of any one of the preceding claims, wherein the electrolytic copper foil is formed through electrodepositing a plating layer by applying a current between an electrode plate and a rotating drum spaced apart from each other in an electrolyte, and
a current density applied during electrodepositing of the plating layer in the surface area is different from a current density applied during electrodepositing of the plating layer in the center area.

**15.** An electrode for a secondary battery, comprising:

the electrolytic copper foil of any one of claim 1 to 14, and
an active material layer disposed on the electrolytic copper foil.

FIG. 1

10a

100

10b

FIG. 2

20

100

20

FIG. 3

FIG. 4

(a)

(b)

FIG. 5

FIG. 6

Europäisches
Patentamt

European
Patent Office

Office européen
des brevets

## EUROPEAN SEARCH REPORT

Application Number

EP 22 21 4379

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2013 019037 A (SUMITOMO METAL MINING CO) 31 January 2013 (2013-01-31) * paragraph [0036] – paragraph [0039]; figures 1-3; table 1 * * paragraph [0045] * * paragraph [0055] * * paragraph [0060] – paragraph [0066] * * paragraph [0077] * | 1-10,14 | INV. C25D1/04 H01M4/00 |
| X | CN 114 908 386 A (UNIV JIANGXI SCI & TECHNOLOGY; ANHUI TONGGUAN COPPER FOIL GROUP CO LTD) 16 August 2022 (2022-08-16) | 1,5,7,8, 10,11,15 | |
| Y | * abstract; claims 1, 2, 3, 11; figure 1; example 1; tables 1, 2 * | 12,13 | |
| Y | EP 3 327 838 A1 (LS MTRON LTD [KR]) 30 May 2018 (2018-05-30) * paragraph [0007]; figure 2; tables 1, 2 * * paragraph [0047] * | 13 | |
| Y | JP 2008 226800 A (FUKUDA METAL FOIL POWDER) 25 September 2008 (2008-09-25) * paragraph [0007] – paragraph [0011] * * paragraph [0014] – paragraph [0015] * | 12,13 | TECHNICAL FIELDS SEARCHED (IPC) C25D H01M |

The present search report has been drawn up for all claims

| Place of search | Date of completion of the search | Examiner |
|---|---|---|
| The Hague | 27 April 2023 | Telias, Gabriela |

## ANNEX TO THE EUROPEAN SEARCH REPORT
## ON EUROPEAN PATENT APPLICATION NO.

EP 22 21 4379

This annex lists the patent family members relating to the patent documents cited in the above-mentioned European search report.
The members are as contained in the European Patent Office EDP file on
The European Patent Office is in no way liable for these particulars which are merely given for the purpose of information.

27-04-2023

| Patent document cited in search report | | Publication date | Patent family member(s) | | Publication date |
|---|---|---|---|---|---|
| JP 2013019037 | A | 31-01-2013 | JP | 5940256 B2 | 29-06-2016 |
| | | | JP | 2013019037 A | 31-01-2013 |
| CN 114908386 | A | 16-08-2022 | NONE | | |
| EP 3327838 | A1 | 30-05-2018 | CN | 106560009 A | 05-04-2017 |
| | | | EP | 3327838 A1 | 30-05-2018 |
| | | | HU | E056333 T2 | 28-02-2022 |
| | | | JP | 6704445 B2 | 03-06-2020 |
| | | | JP | 2018522378 A | 09-08-2018 |
| | | | KR | 20170012010 A | 02-02-2017 |
| | | | PL | 3327838 T3 | 03-01-2022 |
| | | | TW | 201704553 A | 01-02-2017 |
| | | | US | 2018123135 A1 | 03-05-2018 |
| JP 2008226800 | A | 25-09-2008 | JP | 5090028 B2 | 05-12-2012 |
| | | | JP | 2008226800 A | 25-09-2008 |

EPO FORM P0459

For more details about this annex : see Official Journal of the European Patent Office, No. 12/82